# EUROPEAN PATENT APPLICATION

(11) **EP 3 806 188 A1**
(43) Date of publication of application: **14.04.2021**
(21) Application number: 19926734.5
(22) Date of filing: 05.09.2019
(51) Int. Cl.: H01M 2/12, H01M 2/10

(54) **BATTERY MODULE**

(30) Priority: 09.08.2019 CN 201910735143; 09.08.2019 CN 201921303466 U
(71) Applicant: Sunwoda Electric Vehicle Battery Co., Ltd., Shenzhen, Guangdong 518000 (CN)
(72) Inventor: XI, Bingrong, Shenzhen, Guangdong 518000 (CN)
(74) Representative: Ostriga Sonnet Wirths & Vorwerk
(86) International application number: PCT/CN2019/104512
(87) International publication number: WO 2021/026978

(57) **Abstract**

The application relates to the field of battery technologies, and more particularly, to a battery module. The battery module comprises a battery module body and an exhaust device arranged on the battery module body, wherein the battery module body comprises a plurality of cell modules, the exhaust device is provided with an exhaust inlet corresponding to an explosion-proof valve of each cell module in the plurality of cell modules, the exhaust device is also provided with an exhaust outlet and an exhaust channel, the exhaust inlet and the exhaust outlet are respectively communicated with the exhaust channel, and when gas is ejected from the explosion-proof valve, the gas enters the exhaust channel through the exhaust inlet and then is exhausted from the battery module through the exhaust outlet. The application solves problems that when thermorunaway occurs to the battery module, the gas ejected from the explosion-proof valve and aggregated in the module is difficult to be exhausted from the module, and is easy to cause explosion.

## Description

### TECHNICAL FIELD

The present application relates to the field of battery technologies, and more particularly, to a battery module.

### BACKGROUND

In an existing square-housing cell module, when thermorunaway occurs to a square-housing cell (when a battery is charged at a constant voltage, a current and a battery temperature are cumulatively enhanced and gradually damaged), the cell may generate gas. When an internal gas pressure of the cell reaches a certain level, an explosion-proof valve on an upper portion of the cell may be opened, and gas may be ejected from the explosion-proof valve. The ejected gas is high-temperature gas at more than 230°C generally. When the thermorunaway occurs, the gas can only be exhausted through some structural gaps in the module, with a low exhaust efficiency and an uncontrollable performance, resulting in two situations as follows. 1. When the structural gaps in the module are too small, a large amount of high-temperature gas is accumulated in the module in a short time, which is easy to cause violent explosion. 2. When the high-temperature gas is ejected irregularly, it is easy to cause fire and explosion of other cells.

### SUMMARY

### Technical problem

Aiming at the defects in the prior art, the present application proposes a battery module, which is intended to solve problems that when thermorunaway occurs to the battery module, gas ejected from an explosion-proof valve and aggregated in the module is difficult to be exhausted from the module, and is easy to cause explosion.

### Technical solution

The present application proposes the technical solutions as follows.

A battery module comprises a battery module body and an exhaust device arranged on the battery module body, wherein the battery module body comprises a plurality of cell modules, the exhaust device is provided with an exhaust inlet corresponding to an explosion-proof valve of each cell module in the plurality of cell modules, the exhaust device is also provided with an exhaust outlet and an exhaust channel, the exhaust inlet and the exhaust outlet are respectively communicated with the exhaust channel, and when gas is ejected from the explosion-proof valve, the gas enters the exhaust channel through the exhaust inlet and then is exhausted from the battery module through the exhaust outlet.

Further, the exhaust device comprises an upper housing and a lower housing, the lower housing is arranged on a lower side of the upper housing, the exhaust channel is formed between the upper housing and the lower housing, the exhaust inlet is arranged in a lower side wall of the lower housing, the exhaust outlet is arranged in an upper side wall of the upper housing, the battery module body comprises a plurality of cell isolation sleeves, the plurality of cell isolation sleeves are sheathed between every two cell modules in the plurality of cell modules, the lower housing is arranged on the plurality of cell isolation sleeves, the lower side wall of the lower housing is attached to the plurality of cell modules, and each explosion-proof valve is located in the corresponding exhaust inlet.

Further, a concave ring is provided at a lower side wall of the upper housing and a convex ring matched with the concave ring is provided at an upper side wall of the lower housing, or the convex ring is provided at the lower side wall of the upper housing and the convex ring concave ring matched with the convex ring is provided at the upper side wall of the lower housing, the concave ring is provided with a high-temperature glue layer, the convex ring is inserted into the concave ring, and the concave ring is adhered to the convex ring through the high-temperature glue layer.

Further, the battery module further comprises a sealing structure, and the sealing structure is arranged between the lower side wall of the lower housing and the plurality of cell modules.

Further, the sealing structure comprises a sealing foam layer, a first high-temperature adhesive tape layer is provided at an upper side wall of the sealing foam layer, a second high-temperature adhesive tape layer is provided at a lower side wall of the sealing foam layer, the sealing foam layer, the first high-temperature adhesive tape layer and the second high-temperature adhesive tape layer are provided with first through holes on corresponding positions of the exhaust inlets, the first high-temperature adhesive tape layer is adhered to the lower side wall of the lower housing, and the second high-temperature adhesive tape layer is adhered to the plurality of cell modules.

Further, the exhaust device further comprises an exhaust pipe, a mounting hole is provided at the upper side wall of the upper housing, the exhaust pipe is inserted into the mounting hole, arranged on the upper side wall of the upper housing and exposed to the battery module body, the exhaust pipe is communicated with the exhaust channel, and the exhaust outlet is a nozzle at an upper end of the exhaust pipe.

Further, the exhaust device further comprises a plurality of groups of mounting plates, each mounting plate is provided with a first mounting hole, each group of mounting plates comprise two mounting plates which are respectively arranged on two side walls of the upper housing and correspond to a position of the cell isolation sleeve, each group of mounting plates correspond to a group of first mounting holes which are round holes, the remaining groups of first mounting holes are waist-shaped holes, each cell isolation sleeve is provided with a group of second mounting holes corresponding to the group of first mounting holes, and a screw penetrates through the first mounting hole and the second mounting hole to connect the upper housing with the cell isolation sleeve.

Further, the exhaust device further comprises two groups of mounting plates, each mounting plate is provided with a first mounting hole, each group of mounting plates comprise two mounting plates which are respectively arranged on two side walls of the upper housing and correspond to a position of the cell isolation sleeve, each group of mounting plates correspond to a group of first mounting holes which are round holes, the other group of first mounting holes are waist-shaped holes, a group of second mounting holes corresponding to the group of first mounting holes are respectively provided at two cell isolation sleeves in the plurality of cell isolation sleeves, a screw penetrates through the first mounting hole and the second mounting hole to connect the upper housing with the cell isolation sleeve, a group of buckle structures are respectively provided at the remaining cell isolation sleeves in the plurality of cell isolation sleeves, and two sides of the upper side wall of the upper housing are buckled by each group of buckle structures respectively.

Further, a group of buckling structures are provided at each cell isolation sleeve in the plurality of cell isolation sleeves, and two sides of the upper side wall of the upper housing are buckled by each group of buckle structures respectively.

Further, a frame body surrounding the exhaust inlets is provided at the lower side wall of the lower housing, and a plurality of first concave rings are provided at a side wall of the frame body.

### Beneficial effect

According to the above technical solutions, the present application has the beneficial effects that when thermorunaway occurs to the battery module, the gas is ejected from the explosion-proof valve, since the exhaust device is arranged on the battery module body, the gas enters the exhaust channel through the exhaust inlet after being ejected and then is exhausted from the battery module through the exhaust outlet, thereby avoiding a situation that the gas is aggregated in the battery module and is difficult to be exhausted from the battery module, and solving problems that when thermorunaway occurs to the battery module, the gas ejected from the explosion-proof valve and aggregated in the module, is difficult to be exhausted from the module, and is easy to cause explosion.

### BRIEF DESCRIPTION OF THE DRAWINGS

FIG 1 is a structure diagram of a battery module provided in the embodiment of the present application;
FIG 2 is a decomposition diagram of the battery module provided in the embodiment of the present application;
FIG 3 is a structure diagram of an upper housing and a lower housing provided in the embodiment of the present application;
FIG 4 is a decomposition block diagram of another battery module provided in the embodiment of the present application; and
FIG. 5 is a decomposition block diagram of another battery module provided in the embodiment of the present application.

### DETAILED DESCRIPTION

### Optimal embodiments of the present invention

To make the objectives, the technical solutions, and the advantages of the present application clearer, the present application is further described in detail hereinafter with reference to the accompanying drawings and the embodiments. It should be understood that the specific embodiments described herein are only used for explaining the present application and are not intended to limit the present application.

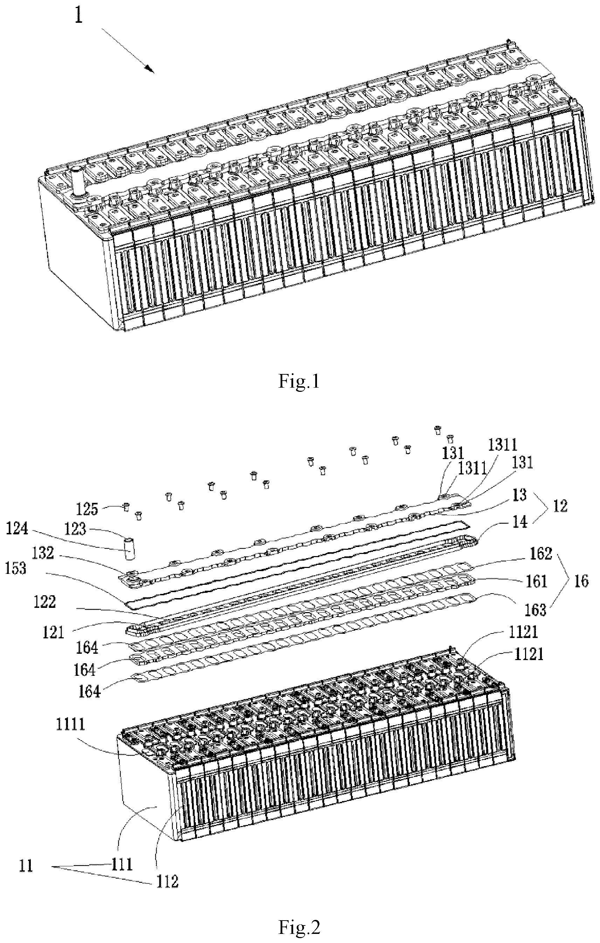

As shown in FIG. 1 and FIG. 2, the embodiment of the present application proposes a battery module 11, which comprises a battery module body 11 and an exhaust device 12, and the exhaust device 12 is arranged on the battery module body 11.

The exhaust device 12 is provided with a plurality of exhaust inlets 121, a plurality of exhaust channels 122 and a plurality of exhaust outlets 123.

The battery module body 11 comprises a plurality of cell modules 111, and the cell modules 111 are provided with explosion-proof valves 1111.

The plurality of exhaust inlets 121 correspond to the explosion-proof valves 1111 of the plurality of cell modules 111, which means that the exhaust inlet 121 is mounted at the explosion-proof valve 1111 for collecting gas ejected from the explosion-proof valve 1111, and the exhaust inlet 121 and the exhaust outlet 123 are respectively communicated with the exhaust channel 122. When the gas is ejected from the explosion-proof valve 1111, the gas enters the exhaust channel 122 through the exhaust inlet 121 and then is exhausted from the battery module 11 through the exhaust outlet 123.

For this purpose, when thermorunaway occurs to the battery module 11, the gas is ejected from the explosion-proof valve 1111. Since the exhaust device 12 is arranged on the battery module body 11, the gas enters the exhaust channel 122 through the exhaust inlet 121 after being ejected and then is exhausted from the battery module 11 through the exhaust outlet 123, thus avoiding a situation that the gas is aggregated in the battery module 11 and is difficult to be exhausted from the battery module, and solving problems that when thermorunaway occurs to the battery module, the gas ejected from the explosion-proof valve and aggregated in the module is difficult to be exhausted from the module, and is easy to cause explosion.

In the embodiment, the exhaust device 12 comprises an upper housing 13 and a lower housing 14, the lower housing 14 is arranged on a lower side of the upper housing 13, and the exhaust channel 122 is formed between the upper housing 13 and the lower housing 14. The exhaust inlet 121 is arranged in a lower side wall of the lower housing 14, and the exhaust outlet 123 is arranged in an upper side wall of the upper housing 13. The battery module body 11 comprises a plurality of cell isolation sleeves 112, the plurality of cell isolation sleeves 112 are sheathed between every two cell modules 111 in the plurality of cell modules 111, and the lower housing 14 is arranged on the plurality of cell isolation sleeves 112. The lower side wall of the lower housing 14 is attached to the plurality of cell modules 111, and each explosion-proof valve 1111 is located in the corresponding exhaust inlet 121. Since the upper housing 13 and the lower housing 14 are housing structures, when the upper housing 13 and the lower housing 14 are mounted together, an interior is an inner cavity structure. For this purpose, the exhaust channel 122 may be formed, one explosion-proof valve 1111 corresponds to one exhaust inlet 121, and the lower side wall of the lower housing 14 is closely attached to the cell module 111, thus having a sealing effect, so that the gas ejected from the explosion-proof valve 1111 can only enter the exhaust channel 122 through the exhaust inlet 121.

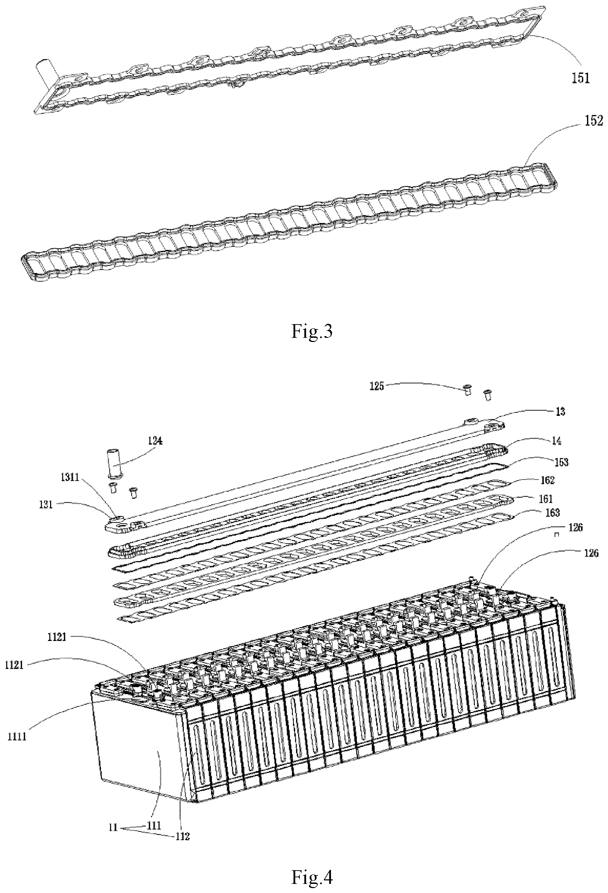

As shown in FIG. 3, in the embodiment, a lower side wall of the upper housing 13 is provided with a concave ring 151 and an upper side wall of the lower housing 14 is provided with a convex ring 152 matched with the concave ring 151, or the lower side wall of the upper housing 13 is provided with the convex ring 152 and the upper side wall of the lower housing 14 is provided with the convex ring 152 concave ring 151 matched with the convex ring 152. The concave ring 151 is provided with a high-temperature glue layer 153, the convex ring 152 is inserted into the concave ring 151, and the concave ring 151 is adhered to the convex ring 152 through the high-temperature glue layer 153. The upper housing 13 and the lower housing 14 are connected together through the concave ring 151 and the convex ring 152. If the concave ring 151 is arranged on the upper housing 13, the convex ring 152 is correspondingly arranged on the lower housing 14, and if the concave ring 151 is arranged on the lower housing 14, the convex ring 152 is correspondingly arranged on the upper housing 13. In order to strengthen connection between the upper housing 13 and the lower housing 14, high-temperature glue is coated on the concave ring 151 to form the high-temperature glue layer 153 for adhering the convex ring 152.

In the embodiment, the battery module 11 further comprises a sealing structure 16, and the sealing structure 16 is arranged between the lower side wall of the lower housing 14 and the plurality of cell modules 111. The sealing structure 16 is used for improving a sealing effect between the lower side wall of the lower housing 14 and the cell module 111, so that the gas ejected from the explosion-proof valve 1111 can only enter the exhaust channel 122 through the exhaust inlet 121.

In the embodiment, the sealing structure 16 comprises a sealing foam layer 161, an upper side wall of the sealing foam layer 161 is provided with a first high-temperature adhesive tape layer 162, and a lower side wall of the sealing foam layer 161 is provided with a second high-temperature adhesive tape layer 163. The sealing foam layer 161, the first high-temperature adhesive tape layer 162 and the second high-temperature adhesive tape layer 163 are provided with first through holes 164 on corresponding positions of the exhaust inlets 121, the first high-temperature adhesive tape layer 162 is adhered to the lower side wall of the lower housing 14, and the second high-temperature adhesive tape layer 163 is adhered to the plurality of cell modules 111. The sealing foam layer 161 is able to be compressed to play a role of a sealing gas performance. The first high-temperature adhesive tape layer 162 is adhered to the lower side wall of the lower housing 14 and the sealing foam layer 161, and the second high-temperature adhesive tape layer 163 is adhered to the sealing foam layer 161 and the cell module 111. The first high-temperature adhesive tape layer 162 and the first high-temperature adhesive tape layer 162 not only have an adhering function but also have a sealing function. An opening of the first through hole 164 is larger than an outer contour of the explosion-proof valve 1111 by 1 mm to 3 mm. Specifically, the sealing foam layer may be a foamed silica gel foam layer.

In the embodiment, the exhaust device 12 further comprises an exhaust pipe 124, the upper side wall of the upper housing 13 is provided with a mounting hole 132, and the exhaust pipe 124 is inserted into the mounting hole 132, arranged on the upper side wall of the upper housing 13 and exposed to the battery module body 11. The exhaust pipe 124 is communicated with the exhaust channel 122, and the exhaust outlet 123 is a nozzle at an upper end of the exhaust pipe 124. The exhaust pipe 124 may be connected to the upper housing 13 in a laser welding manner, a high-temperature glue adhering manner, or an integrally die-casting manner.

In the embodiment, the exhaust device 12 further comprises a plurality of groups of mounting plates 131, each mounting plate 131 is provided with a first mounting hole 1311, and each group of mounting plates 131 comprise two mounting plates 131 which are respectively arranged on two side walls of the upper housing 13 and correspond to a position of the cell isolation sleeve 112. Each group of mounting plates 131 correspond to a group of first mounting holes 1311 which are round holes, the remaining groups of first mounting holes 1311 are waist-shaped holes, and each cell isolation sleeve 112 is provided with a group of second mounting holes 1121 corresponding to the group of first mounting holes 1311. A screw 125 penetrates through the first mounting hole 1311 and the second mounting hole 1121 to connect the upper housing 13 with the cell isolation sleeve 112. The upper housing 13 is connected to the cell isolation sleeve 112 through the first mounting hole 1311 of the upper housing 13 and the second mounting hole 1121 of the cell isolation sleeve 112 with the screw 125, which means that the exhaust device 12 is mounted on the cell isolation sleeve 112. A middle group of first mounting holes 1311 in the plurality of groups of first mounting holes are round holes for accurately positioning the screw 125 during mounting, and the other groups of first mounting holes are waist-shaped holes for absorbing a tolerance during mounting. The remaining groups of first mounting holes 1311 are other groups of first mounting holes 1311 except the group of first mounting holes 1311.

The exhaust pipe 124 and the upper housing 13 are both made of metal, which may be aluminum, iron or tin. The lower housing 14 is made of high-temperature plastic, which may be one of PI (polyimide), PBI (polybenzimidazole), PEEK (polyether ether ketone) and LCP (liquid crystal polymer).

As shown in FIG 4, in the embodiment, the exhaust device 12 further comprises two groups of mounting plates 131, each mounting plate 131 is provided with a first mounting hole 1311, and each group of mounting plates 131 comprise two mounting plates 131 which are respectively arranged on two side walls of the upper housing 13 and correspond to a position of the cell isolation sleeve 112. Each group of mounting plates 131 correspond to a group of first mounting holes 1311 which are round holes, the other group of first mounting holes 1311 are waist-shaped holes, and two cell isolation sleeves 112 in the plurality of cell isolation sleeves 112 are respectively provided with a group of second mounting holes 1121 corresponding to the group of first mounting holes 1311. A screw 125 penetrates through the first mounting hole 1311 and the second mounting hole 1121 to connect the upper housing 13 with the cell isolation sleeve 112, the remaining cell isolation sleeves 112 in the plurality of cell isolation sleeves 112 are respectively provided with a group of buckle structures 126, and two sides of the upper side wall of the upper housing are buckled by each group of buckle structures 126 respectively. The group of buckle structures 126 comprise two buckle structures 126. Not only threaded connection is used, but also buckle connection is used, so that connection is kept fixed and a user may operate conveniently. A number of the screws 125 is reduced in the solution, and meanwhile, a good airtightness of the exhaust device 12 is ensured.

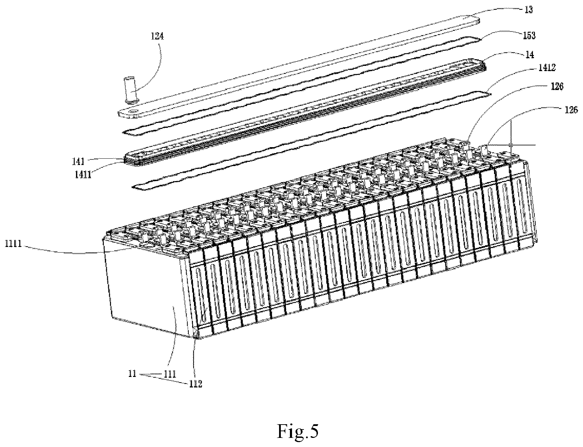

As shown in FIG 5, in the embodiment, each cell isolation sleeve 112 in the plurality of cell isolation sleeves 112 is provided with a group of buckling structures 126, and two sides of the upper side wall of the upper housing 13 are buckled by each group of buckling structures 126 respectively. The group of buckle structures 126 comprise two buckle structures 126. The buckle connection is used, so that the connection is kept fixed and the user may operate conveniently. The exhaust device 12 is buckled by the buckle structure 126 to ensure an overall airtightness and a reliability. The lower side wall of the lower housing 14 is provided with a frame body 141 surrounding the exhaust inlets 121, and a side wall of the frame body 141 is provided with a plurality of first concave rings 1411. The first concave rings 1411 increase a creepage distance between the upper housing 13 and the cell module 111. The lower side wall of the frame body 141 is provided with the first high-temperature glue layer 1412, the upper side wall of the first high-temperature glue layer 1412 is adhered to the lower side wall of the frame body 141, and the lower side wall of the first high-temperature glue layer 1412 is adhered to the plurality of cell modules 111.

Those described above are merely preferred embodiments of the present application, but are not intended to limit the present application. Any modifications, equivalent substitutions and improvements made without departing from the spirit and principle of the present application shall all fall within the scope of protection of the present application.

## Claims

1. A battery module, comprising a battery module body and an exhaust device arranged on the battery module body, wherein the battery module body comprises a plurality of cell modules, the exhaust device is provided with an exhaust inlet corresponding to an explosion-proof valve of each cell module in the plurality of cell modules, the exhaust device is also provided with an exhaust outlet and an exhaust channel, the exhaust inlet and the exhaust outlet are respectively communicated with the exhaust channel, and when gas is ejected from the explosion-proof valve, the gas enters the exhaust channel through the exhaust inlet and then is exhausted from the battery module through the exhaust outlet.

2. The battery module according to claim 1, wherein the exhaust device comprises an upper housing and a lower housing, the lower housing is arranged at a lower side of the upper housing, the exhaust channel is formed between the upper housing and the lower housing, the exhaust inlet is arranged in a lower side wall of the lower housing, the exhaust outlet is arranged in an upper side wall of the upper housing, the battery module body comprises a plurality of cell isolation sleeves, the plurality of cell isolation sleeves are sheathed between every two cell modules in the plurality of cell modules, the lower housing is arranged on the plurality of cell isolation sleeves, the lower side wall of the lower housing is attached to the plurality of cell modules, and each explosion-proof valve is located in the corresponding exhaust inlet.

3. The battery module according to claim 2, wherein a concave ring is provided at a lower side wall of the upper housing and a convex ring matched with the concave ring is provided at an upper side wall of the lower housing, or the convex ring is provided at the lower side wall of the upper housing and the concave ring matched with the convex ring is provided at the upper side wall of the lower housing, the concave ring is provided with a high-temperature glue layer, the convex ring is inserted into the concave ring, and the concave ring is adhered to the convex ring through the high-temperature glue layer.

4. The battery module according to claim 2 or 3, wherein the battery module further comprises a sealing structure, and the sealing structure is arranged between the lower side wall of the lower housing and the plurality of cell modules.

5. The battery module according to claim 4, wherein the sealing structure comprises a sealing foam layer, a first high-temperature adhesive tape layer is provided at an upper side wall of the sealing foam layer, a second high-temperature adhesive tape layer is provided at a lower side wall of the sealing foam layer, the sealing foam layer, the first high-temperature adhesive tape layer and the second high-temperature adhesive tape layer are provided with first through holes on corresponding positions of the exhaust inlets, the first high-temperature adhesive tape layer is adhered to the lower side wall of the lower housing, and the second high-temperature adhesive tape layer is adhered to the plurality of cell modules.

6. The battery module according to any one of claims 2 to 5, wherein the exhaust device further comprises an exhaust pipe, a mounting hole is provided at the upper side wall of the upper housing, the exhaust pipe is inserted into the mounting hole, arranged on the upper side wall of the upper housing and exposed to the battery module body, the exhaust pipe is communicated with the exhaust channel, and the exhaust outlet is a nozzle at an upper end of the exhaust pipe.

7. The battery module according to any one of claims 2 to 5, wherein the exhaust device further comprises a plurality of groups of mounting plates, each mounting plate is provided with a first mounting hole, each group of mounting plates comprise two mounting plates which are respectively arranged on two side walls of the upper housing and correspond to a position of the cell isolation sleeve, each group of mounting plates correspond to a group of first mounting holes which are round holes, the remaining groups of first mounting holes are waist-shaped holes, each cell isolation sleeve is provided with a group of second mounting holes corresponding to the group of first mounting holes, and a screw penetrates through the first mounting hole and the second mounting hole to connect the upper housing with the cell isolation sleeve.

8. The battery module according to any one of claims 2 to 5, wherein the exhaust device further comprises two groups of mounting plates, each mounting plate is provided with a first mounting hole, each group of mounting plates comprise two mounting plates which are respectively arranged on two side walls of the upper housing and correspond to a position of the cell isolation sleeve, each group of mounting plates correspond to a group of first mounting holes which are round holes, the other group of first mounting holes are waist-shaped holes, a group of second mounting holes corresponding to the group of first mounting holes are respectively provided at two cell isolation sleeves in the plurality of cell isolation sleeves, a screw penetrates through the first mounting hole and the second mounting hole to connect the upper housing with the cell isolation sleeve, a group of buckle structures are respectively provided at the remaining cell isolation sleeves in the plurality of cell isolation sleeves, and two sides of the upper side wall of the upper housing are buckled by each group of buckle structures respectively.

9. The battery module according to claim 2 to 3, wherein a group of buckling structures are provided at each cell isolation sleeve in the plurality of cell isolation sleeves, and two sides of the upper side wall of the upper housing are buckled by each group of buckle structures respectively.

10. The battery module according to claim 9, wherein a frame body surrounding the exhaust inlets is provided at the lower side wall of the lower housing, and a side wall of the frame body is provided with a plurality of first concave rings.
